# EUROPÄISCHE PATENTSCHRIFT

(11) **EP 2 311 657 B1**
(45) Veröffentlichungstag und Bekanntmachung des Hinweises auf die Patenterteilung: **31.08.2016**
(21) Anmeldenummer: 10178576.4
(22) Anmeldetag: 23.09.2010
(51) Int. Cl.: B60C 11/04, B60C 11/13, B60C 11/03

(54) **Laufstreifenprofil eines Fahrzeugluftreifens**
Tread profile of a vehicle tyre
Profil de bande de roulement d'un pneu de véhicule

(30) Priorität: 14.10.2009 DE 102009044244
(43) Veröffentlichungstag der Anmeldung: 20.04.2011
(73) Patentinhaber: Continental Reifen Deutschland GmbH, 30165 Hannover (DE)
(72) Erfinder: Behr, Ulrich, 30169 Hannover (DE)
(74) Vertreter: Finger, Karsten

(56) Entgegenhaltungen:
- EP-A1- 0 681 930
- EP-A1- 1 698 491
- US-A- 4 550 756

## Beschreibung

Die Erfindung betrifft ein Laufstreifenprofil eines Fahrzeugluftreifens mit wenigstens einer durch zwei über den Umfang des Reifens erstreckte radial erhabene Rippen axial begrenzten und über den Umfang des Reifens erstreckten, in Umfangsrichtung U ausgerichteten Rille, welche mit einer maximalen Rillentiefe T ausgebildet und in radialer Richtung R nach innen durch, einen Rillengrund und in beide axiale Erstreckungsrichtungen jeweils durch eine Rillenwand begrenzt ist, die jeweils eine zur Rille gerichtete Rippenflanke einer der beiden Rippen bildet, wobei sich die beiden Rillenwände jeweils aus dem Rillengrund nach radial außen bis zu der die jeweilige Rippenflanke nach radial außen begrenzenden Mantelfläche erstrecken und jeweils einen radial inneren und einen radial äußeren Erstreckungsbereich aufweisen, von denen der radial innere Erstreckungsbereich ausgehend vom Rillengrund in radialer Richtung mit einer Erstreckungshöhe h mit (0.07T) ≤ h ≤ (0,45T) ausgebildet ist, wobei die Rippenflanken im radial inneren Erstreckungsbereich in allen Schnittebenen, die die Reifenachse beinhalten, entweder jeweils eine geradlinige Schnittkontur mit Neigungswinkel (γ, δ) zur Radialen R oder eine gekrümmte Kontur mit Krümmungsradius und auf der von der Reifenachse wegweisenden Seite der Rippenflanke liegendem Krümmungsmittelpunkt bilden.

Derartige Laufstreifenprofile sind bekannt. Für gute Aquaplaning-Eigenschaften ist es wünschenswert, derartige geradlinige Umfangsrillen ohne Störungen auszubilden. Gerade bei Profilen mit Umfangsrippen, bei denen die Rippen einen seitlichen Abfluss verhindern, ist der störungsfreie Abfluss durch die Umfangsrille zur Erreichung guter Aquaplaning-Eigenschaften besonders wichtig. Allerdings besteht bei derartigen geradlinigen Umfangsrillen die Gefahr der Bildung stehender Wellen in der Luftströmung, wodurch für das menschliche Gehör unangenehme Pfeif- bzw. Zischgeräusche entstehen können.

Im Zusammenhang mit Winterreifen wurde gelegentlich vorgeschlagen, Rillenwände mit geneigten Flächen mit längs der Erstreckung in Umfangsrichtung abrupten Veränderungen der Neigung, wodurch zusätzliche Griffkanten zum verbesserten Griff auf Schnee entstehen. Diese abrupten Übergänge stellen gleichzeitig jedoch Störungsquellen für den Wasserdurchfluss dar, wodurch die Aquaplaning-Eigenschaften negativ beeinflusst werden können.

Beispielsweise aus der US2005/0076986 A1 ist es bekannt, bei Blockprofilen über den Umfang verteilt zur Versteifung kurze Eisteckungsabschnitte auszubilden, bei denen aus der Rillenwand mit Hilfe von geeigneten Flächen Versteifungsbereiche ausgebildet werden, die sich in die Rille hinein erstrecken. Auch diese Versteifungselemente können als Störungselemente die Wasserströmung behindern, wodurch die Aquaplaning-Eigenschaften negativ beeinflusst werden können. Zwischen den über den Umfang vereinzelt verteilt ausgebildeten Versteifungsabschnitten sind jeweils große vollständig geradlinige Abschnitte ausgebildet, die weiterhin das Entstehen von stehenden Wellen bei Luftströmung ermöglichen.

### Aus der EP1698 491A1 ist ein Laufstreifenprofil eines Fahrzeugluftreifens gemäß den Merkmalen des Oberbegriffs des Anspruchs 1 bekannt.

Der Erfindung liegt die Aufgabe zugrunde ein Laufstreifenprofil eines Fahrzeugluftreifens gemäß den Merkmalen des Oberbegriffs zu schaffen, bei dem mit einfachen Mitteln trotz Umfangsrippen und Umfangsrille gute Aquaplaning-Eigenschaften unter Vermeidung störender Geräuschentstehung ermöglicht werden.

Erfindungsgemäß wird die Aufgabe durch Ausbildung eines Laufstreifenprofils eines Fahrzeugluftreifens mit wenigstens einer durch zwei über den Umfang des Reifens erstreckte radial erhabene Rippen axial begrenzten und über den Umfang des Reifens erstreckten, in Umfangsrichtung U ausgerichteten Rille, welche mit einer maximalen Rillentiefe T ausgebildet und in radialer Richtung R nach innen durch einen Rillengrund und in beide axiale Erstreckungsrichtungen jeweils durch eine Rillenwand begrenzt ist, die jeweils eine zur Rille gerichtete Rippenflanke einer der beiden Rippen bildet, wobei sich die beiden Rillenwände jeweils aus dem Rillengrund nach radial außen bis zu der die jeweilige Rippenflanke nach radial außen begrenzenden Mantelfläche erstrecken und jeweils einen radial inneren und einen radial äußeren Erstreckungsbereich aufweisen, von denen der radial innere Erstreckungsbereich ausgehend vom Rillengrund in radialer Richtung mit einer Erstreckungshöhe h mit (0,07T) ≤ h ≤ (0,45T) ausgebildet ist, wobei die Rippenflanken im radial inneren Erstreckungsbereich in allen Schnittebenen, die die Reifenachse beinhalten, entweder jeweils eine geradlinige Schnittkontur mit Neigungswinkel (γ, δ) zur Radialen R oder eine gekrümmte Kontur mit Krümmungsradius und auf der von der Reifenachse wegweisenden Seite der Rippenflanke liegendem Krümmungsmittelpunkt bilden, bei dem die Rille aus längs ihrer Umfangserstreckung in ihrer Abfolge alternierendeden ersten und zweiten ümtangsabschnitten ausgebildet ist, wobei jede Rippenflanke in ihrem radial inneren Erstreckungsbereich im ersten Umfangsabschnitt mit anderer Neigung bzw. mit anderen Krümmung ausgebildet ist als im zweiten Umfangsabschnitt und zwar derart, dass die eine Rippenflanke jeweils in den ersten Umfangsabschnitten größere Neigungswinkel γ bzw. einen größeren Krümmungsradius als im zweiten Umfangsabschnitt und die andere Rippenflanke jeweils in den ersten Umfangsabschnitten kleinere Neigungswinkel δ bzw. einen kleineren Krümmungsradius als im zweiten Umfangsabschnitt aufweist, gemäß den Merkmalen von Anspruch 1 gelöst, bei dem der radial äußere Erstreckungsbereich der ersten Rippenflanke in allen die Reifenachse aufweisenden Schnittebenen eine im wesentlichen geradlinige Schnittkontur mit Neigungswinkeln **a** zur Radialen R und der radial äußere Erstreckungsbereich der zweiten Rippenflanke in allen die Reifenachse aufweisenden Schnittebenen eine im wesentlichen geradlinige Schnittkontur mit Neigungswinkeln **β** zur Radialen R aufweist, wobei der radial äußere Erstreckungsbereich der ersten Rippenflanke in den ersten Umfangsabschnitten der Rille mit Neigungswinkeln α₁ zur Radialen R und in den zweiten Umfangsabschnitten der Rille mit Neigungswinkeln α₂ zur Radialen R ausgebildet ist, wobei der radial äußere Erstreckungsbereich der zweiten Rippenflanke in den ersten Umfangsabschnitten der Rille mit Neigungswinkeln β₁ zur Radialen R und in den zweiten Umfangsabschnitten der Rille mit Neigungswinkeln β₂ zur Radialen R ausgebildet ist, mit α₁ <α₂ und mit β₁ >β₂.

Die Ausbildung ermöglicht trotz Umfangsrippen die zwischen ihnen ausgebildete Umfangsrille störungsfrei mit gleichmäßigem großem, offenen Durchflussquerschnitt über den gesamten Umfang hinweg auszubilden, wodurch Wasser über den gesamten Lebenszyklus hinweg störungsfrei aus dem Profil abgeleitet werden kann und die Gefahr von Aquaplaning reduziert wird. Die über den gesamten Umfang alternierend wechselnden geneigten Flächen des radial inneren Erstreckungsbereiches behindern die Entstehung einer gleichmäßigen Luftströmung und das Entstehen von stehenden Wellen, wodurch die Gefahr der Geräuschbildung reduziert wird. Durch diese Ausbildung sind in einfacher Weise die Vorteile der alternierend ausgebildeten Umfangsabschnitte bei guter Einformbarkeit umsetzbar bei vergleichmäßigtem Verlauf der aus radial äußerer, die Bodenkontaktoberfläche bildenden Mantelfläche und Rillenflanke und aus Rillenflanke und Rillengrund gebildeten Schnittkantenverläufe. Bei neuwertigen Reifen ermöglicht dies eine weiter verbesserte Geräuschreduktion bei verbesserten Aquaplaningeigenschaften.

Besonders vorteilhaft ist die Ausbildung gemäß den Merkmalen von Anspruch 2, bei dem die Umfangsabschnitte jeweils in Umfangsrichtung gemessene Erstreckungslänge L von 20mm ≤ L ≤ 100mm aufweisen. Hierdurch können einfach und zuverlässig ausreichend viele wechselnde Umfangsabschnitte zur Vermeidung der Entstehung akustischer stehender Wellen bei minimaler Verwirbelung der Wasserströmung sichergestellt werden.

Besonders vorteilhaft ist die Ausbildung gemäß den Merkmalen von Anspruch 3, bei dem zwischen erstem und zweitem Umfangsabschnitt jeweils ein gegenüber dem ersten und zweiten Umfangsabschnitt kürzerer Übergangsabschnitt ausgebildet ist, in welchem an beiden Rippenflanken jeweils im radial inneren Erstreckungsbereich der Neigungswinkel bzw. der Krümmungsradius sich längs der Erstreckung der Rille stetig - insbesondere kontinuierlich - ändert. Die fließenden Übergänge führen zu weiterer Reduktion von Verwirbelungen, wodurch positive Aquaplaningeigenschaften weiter begünstigt werden.

Besonders vorteilhaft ist die Ausbildung gemäß den Merkmalen von Anspruch 4 mit einer Erstreckungshöhe h von 0,5mm ≤ h ≤ 4mm und mit einer Rillentiefe T von 6,5mm ≤ T ≤ 9mm. Diese Bereiche ermöglichen eine Optimierung von guten Aquaplaningeigenschaften bei sicherer zuverlässiger Verhinderung der Entstehung stehender akustischer Wellen.

Besonders vorteilhaft ist die Ausbildung gemäß den Merkmalen von Anspruch 5, wobei die eine Rippenflanke in ihrem radial inneren Erstreckungsbereich jeweils in den ersten Umfangsabschnitten mit Neigungswinkeln γ₁ und in den zweiten Umfangsabschnitten mit Neigungswinkeln γ₂ gegenüber der Radialen R und die andere Rippenflanke in ihrem radial inneren Erstreckungsbereich jeweils in den ersten Umfangsabschnitten mit Neigungswinkeln δ₁ und in den zweiten Umfangsabschnitten mit Neigungswinkeln δ₂ gegenüber der Radialen R mit γ₁ > γ₂ und mit δ₁ < δ₂ ausgebildet ist, mit 35° < γ₁, ≤ 45°, 35° ≤ γ₂ < 45°, 35°≤ δ₁ < 45° und 35°< δ₂ ≤ 45°.

Besonders vorteilhaft ist die Ausbildung gemäß den Merkmalen von Anspruch 6, wobei der radial innere Erstreckungsbereich der beiden Rippenflanken jeweils über den gesamten Umfang des Reifens in den die Reifenachse aufweisenden Schnittebenen mit einer in axialer Richtung A gemessenen Erstreckungsbreite b ausgebildet ist mit 2mm ≤ b ≤ (B/2), wobei B das jeweilige Maß der axialen Erstreckung der Rille an der radial äußeren Mantelfläche des Reifens ist, wobei B insbesondere mit 4mm ≤ B ≤ 25mm ausgebildet ist. Diese Bereiche ermöglichen eine Optimierung von guten Aquaplaningeigenschaften bei sicherer zuverlässiger Verhinderung der Entstehung stehender akustischer Wellen.

Besonders vorteilhaft ist die Ausbildung gemäß den Merkmalen von Anspruch 7, wobei 0° ≤ α ≤ 15° und 0° ≤ β ≤ 15°. Dies ermöglicht eine einfache, gute Einformung in einer Vulkanisierform bei Sicherstellung guter Abstützeffekte der durch die Rippenflanken begrenzten Profilelemente zur sicheren Kraftübertragung für gute Handlingeigenschaften und guten Aquaplaningeigenschaften des Laufstreifenprofils.

Besonders vorteilhaft ist die Ausbildung gemäß den Merkmalen von Anspruch 8, wobei wenigstens bei einer der beiden Rippen - insbesondere bei beiden Rippen -die Rippenflanke mit der die Rippe nach radial außen begrenzenden, die Bodenkontakt bildenden Oberfläche eine geradlinige in Umfangsrichtung U ausgerichtete über den Umfang des Reifens erstreckte Schnittkonturlinie bildet, die den radial äußeren Erstreckungsbereich der Rippenflanke nach radial außen begrenzt. Die Geräuschbildung wird durch die minimierte Gefahr der Schwingungsanregung an der Mantelfläche weiter minimiert.

Besonders vorteilhaft ist die Ausbildung gemäß den Merkmalen von Anspruch 9, wobei wenigstens bei einer der beiden Rippen - insbesondere bei beiden Rippen -die Rippenflanke mit dem die Rille nach radial innen begrenzenden Rillengrund eine geradlinige in Umfangsrichtung U ausgerichtete über den Umfang des Reifens erstreckte Schnittkonturlinie bildet, die den radial inneren Erstreckungsbereich der Rippenflanke nach radial innen begrenzt. Die Aquaplaningeigenschaften werden durch die minimierte Gefahr der Verwirbelung im Rillengrund weiter verbessert.

Besonders vorteilhaft ist die Ausbildung gemäß den Merkmalen von Anspruch 10, wobei die Neigungswinkel γ₁, γ₂, δ₁ und δ₂ mit γ₁= (1/2)(90°- α₁), mit γ₂= (1/2)(90°- α₂), mit δ₁= (1/2)(90°- β₁) und mit δ₂= (1/2)(90°- β₂) ausgebildet sind.

Die Erfindung wird im Folgenden an Hand der in den Figuren 1 bis 11 dargestellten Ausführungsbeispiele näher erläutert. Darin zeigen
- Fig. 1: Draufsicht auf einen axialen Erstreckungsabschnitt eines Laufstreifenprofils für Fahrzeugluftreifen für PKW,
- Fig. 2: Umfangsabschnitt des Laufstreifenprofils von Fig.1 in perspektivischer Darstellung,
- Fig. 3: Querschnittsdarstellung der Umfangsrille von Fig.1 gemäß Schnitt III-III von Fig.1,
- Fig. 4: Querschnittsdarstellung der Umfangsrille von Fig. 1 gemäß Schnitt IV-IV von Fig.1,
- Fig. 5: Querschnittsdarstellung der Umfangsrille von Fig. gemäß Schnitt V-V von Fig.1,
- Fig. 6: Umfangsrille von Fig.1 mit alternativer Ausbildung des Querschnitts in Querschnittsdarstellung der Umfangsrille von Fig. 1 gemäß Schnitt III-III von Fig.1,
- Fig. 7: Alternative Ausführung der Umfangsrille von Fig.1 in Querschnittdarstellung gemäß Schnitt IV-IV von Fig.1,
- Fig. 8: Alternative Ausführung der Umfangsrille von Fig.1 in Querschnittdarstellung gemäß Schnitt V-V von Fig.1,
- Fig. 9: Umfangsrille von Fig.1 mit zweiter alternativer Ausbildung des Querschnitts in Querschnittsdarstellung der Umfangsrille von Fig.1 gemäß Schnitt III-III von Fig.1,
- Fig. 10: Zweite alternative Ausführung der Umfangsrille von Fig. 1 in Querschnittdarstellung gemäß Schnitt IV-IV von Fig.1, und
- Fig. 11: Zweite alternative Ausführung der Umfangsrille von Fig.1 in Querschnittdarstellung gemäß Schnitt V-V von Fig.1.

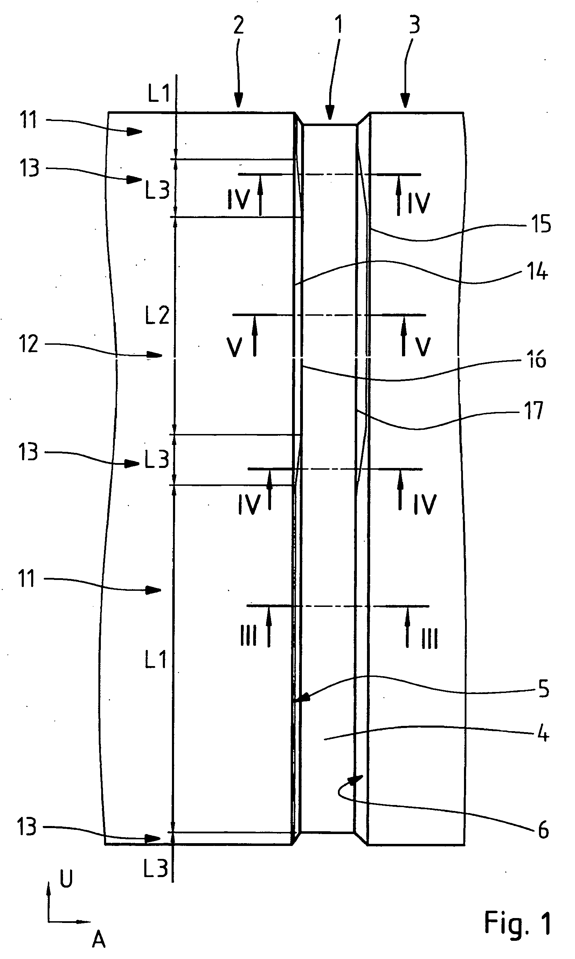

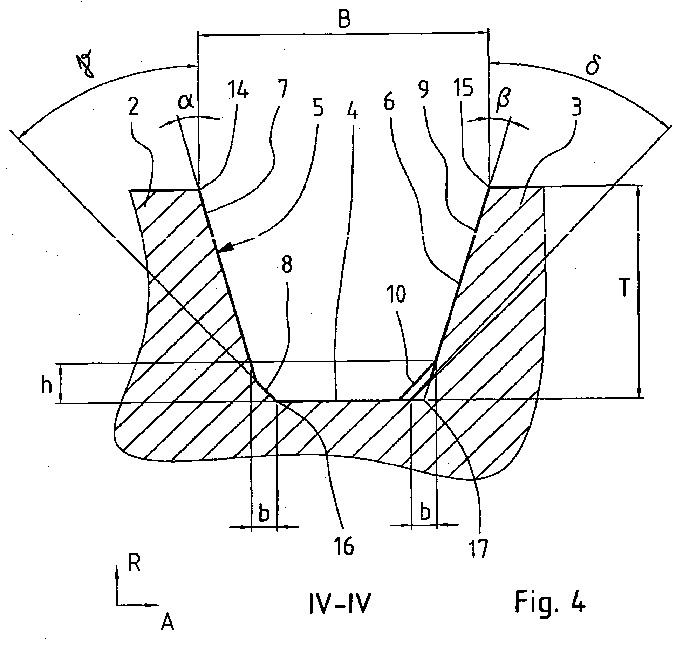

Die Figur 1 bis 5 zeigen einen Ausschnitt eines Laufstreifenprofils eines Fahrzeugluftreifens für PKW-Reifen radialer Bauart mit zwei in axialer Richtung A des Fahrzeugluftreifens innerhalb der Bodenaufstandsfläche nebeneinander angeordneten, über den gesamten Umfang des Fahrzeugluftreifens erstreckten und in Umfangsrichtung U ausgerichteten Umfangsrippen 2 und 3, die in axialer Richtung A durch eine über den gesamten Umfang des Fahrzeugluftreifens erstreckten und in Umfangsrichtung U ausgerichtete Umfangsrille 1 voneinander beabstandet sind. Die Umfangsrille 1 ist in bekannter Weise aus einem über den gesamten Umfang des Fahrzeugluftreifen erstreckten, in Umfangsrichtung U ausgerichteten und die Umfangsrille 1 nach radial innen zum Reifen hin begrenzenden Rillengrund 4, aus einer in axialer Richtung A die Umfangsrille 1 zur Umfangsrippe 2 hin begrenzenden, die Rippenflanke 5 der Umfangsrippe 2 bildenden Rillenwand und aus einer in axialer Richtung A die Umfangsrille 1 zur Umfangsrippe 3 hin begrenzenden, die Rippenflanke 6 der Umfangsrippe 3 bildenden Rillenwand ausgebildet.

Die Rippenflanke 5 ist aus einem radial inneren Erstreckungsbereich 8 und aus einem radial äußeren Erstreckungsbereich 7 ausgebildet. Die Rillenflanke 6 ist aus einem radial inneren Erstreckungsbereich 10 und einem radial äußeren Erstreckungsbereich 9 ausgebildet. Die beiden radialen inneren Erstreckungsbereiche 8 und 10 erstrecken sich ausgehend von dem Rillengrund 4 der Umfangsrille 1 in radialer Richtung R des Fahrzeugluftreifens nach außen über eine Erstreckungshöhe h. Der radial äußere Erstreckungsbereich 7 der Rippenflanke 5 erstreckt sich in radialer Richtung R ausgehend vom radial inneren Erstreckungsbereich 8 bis zu der die Umfangsrippe 2 nach radial außen hin begrenzenden, die Straßenkontaktoberfläche bildenden Mantelfläche und schneidet diese in einer Schnittkonturlinie 14. Der radial äußere Erstreckungsbereich 9 der Rippenflanke 6 erstreckt sich in radialer Richtung R nach außen ausgehend von dem radial inneren Erstreckungsbereich 10 bis zu der die Umfangsrippe 3 nach radial außen begrenzenden, die Straßenkontaktoberfläche bildenden Mantelfläche und schneidet diese in einer Schnittkonturlinie 15. Die Schnittkonturlinien 14 und 15 sind jeweils geradlinig über den gesamten Umfang des Fahrzeugluftreifens erstreckt in Umfangsrichtung U ausgerichtet ausgebildet.

Der radial innere Erstreckungsbereich 8 der Rippenflanke 5 schneidet den Rillengrund 4 in einer Schnittkonturlinie 16. Der radial innere Erstreckungsbereich 10 der Rippenflanke 6 schneidet den Rillengrund 4 in einer Schnittkonturlinie 17. Die Schnittkonturlinien 16 und 17 sind jeweils geradlinig parallel zueinander in Umfangsrichtung U ausgerichtet und erstrecken sich über den gesamten Umfang des Fahrzeugluftreifens.

Die radiale Erstreckungshöhe h der radial inneren Erstreckungsbereiche 8 und 9 ist mit (0,07 T) ≤ h ≤ (0,45 T) ausgebildet, wobei T die Rillentiefe der Umfangsrille 1 ist, welche den in radialer Richtung R gemessenen maximalen Abstand zwischen der Mantelfläche des Profils im Bereich der Umfangsrille 1 und dem Rillengrund 4 am Neureifen angibt.

Die Rillentiefe T ist so gewählt, dass 6,5 mm ≤ T ≤ 9 mm ist. Die Erstreckungshöhe h ist so gewählt, dass 0,5mm ≤ h ≤ 4 mm ist.

In einem Ausführungsbeispiel ist h = 3 mm und T = 9 mm gewählt.

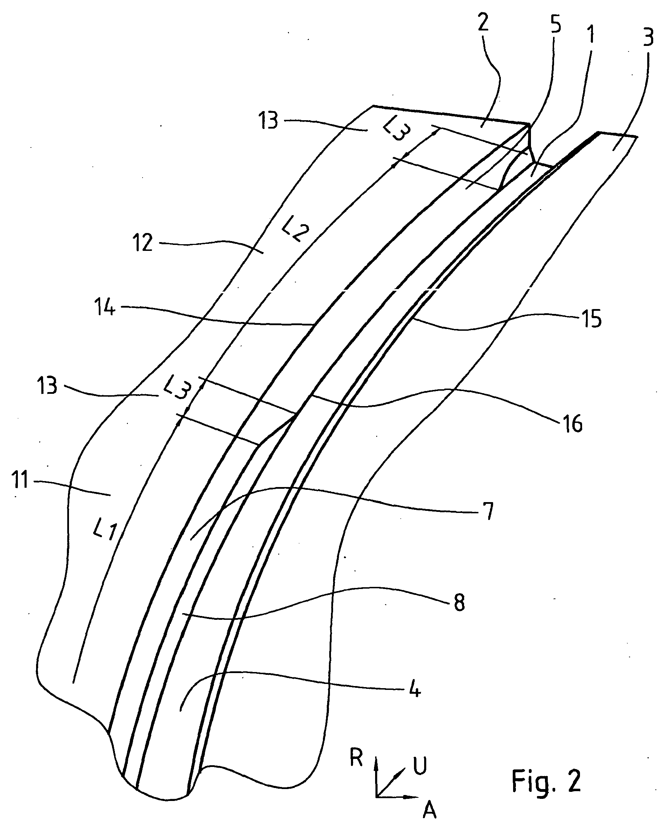

Wie in den Figuren 1 und 2 dargestellt ist, ist die Umfangsrille 1 aus in Umfangsrichtung U über den gesamten Umfang des Fahrzeugluftreifens in alternierender Reihenfolge ausgebildeten ersten Umfangsabschnitten 11 der Umfangslänge L₁ und zweiten Umfangsabschnitten 12 der Umfangslänge L₂ ausgebildet und aus gegenüber den Umfangslängen L₁ und L₂ kurzen zwischen den alternierenden Umfangsabschnitten 11 und 12 ausgebildeten Übergangsabschnitten 13 der Länge L₃.

Die Umfangslängen L₁ und L₂ sind dabei mit einer Länge aus einem Bereich zwischen 20 und 100 mm einschließlich gewählt. Die Umfangslänge L₃ ist L₃>1mm, aber deutlich kleiner als L₁ und L₂ und erstreckt sich maximal über 1/5 der kürzeren der beiden Erstreckungslänge L₁ und L₂, der vom jeweiligen Übergangsabschnitt 13 voneinander getrennten ersten und zweiten Umfangsabschnitte 11 und 12.

Beispielsweise ist ein erster Umfangsabschnitt 11 mit einer Länge L₁ =50 mm, der in Umfangsrichtung U nachfolgende Umfangsabschnitt 12 mit einer Länge L₂ = 40 mm ausgebildet und der die beiden Umfangsabschnitte 11 und 12 in Umfangsrichtung U trennende Übergangsabschnitt 13 mit einer Länge L₃ = 5 mm ausgebildet.

In einem Ausführungsbeispiel sind die Umfangsabschnitte 11 alle gleich lang gewählt. In einem anderen Ausführungsbeispiel sind die Umfangsabschnitte 12 alle gleich lang gewählt. In einem dritten Ausführungsbeispiel sind alle Umfangsabschnitte 11 gleich lang gewählt und alle Umfangsabschnitte 12 gleich lang mit L₁> L₂ gewählt. In einem vierten Ausführungsbeispiel sind alle Umfangsabschnitte 11 gleich lang gewählt und alle Umfangsabschnitte 12 gleich lang mit L₁= L₂ gewählt.

In einem fünften Ausführungsbeispiel sind die Umfangsabschnitte 11 und 12 entsprechend einer geeigneten Pitchfolgenverteilung des Reifenprofils mit über den Umfang des Reifens unterschiedlicher Länge ausgebildet.

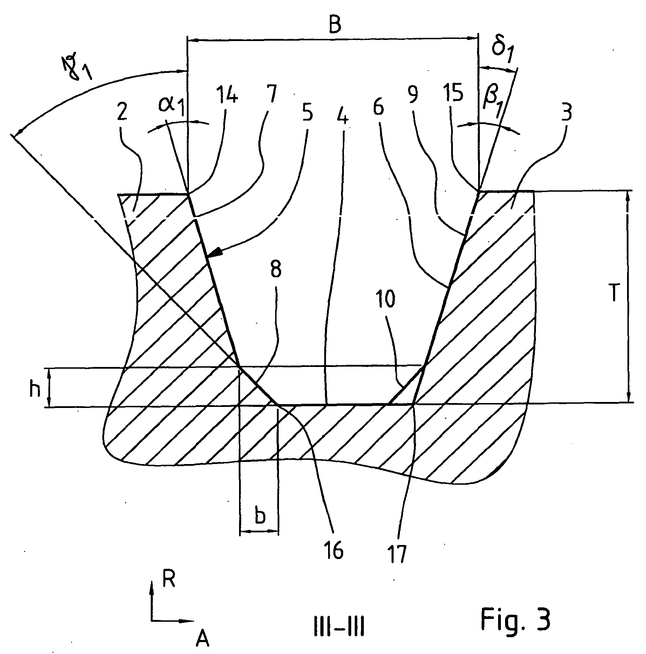

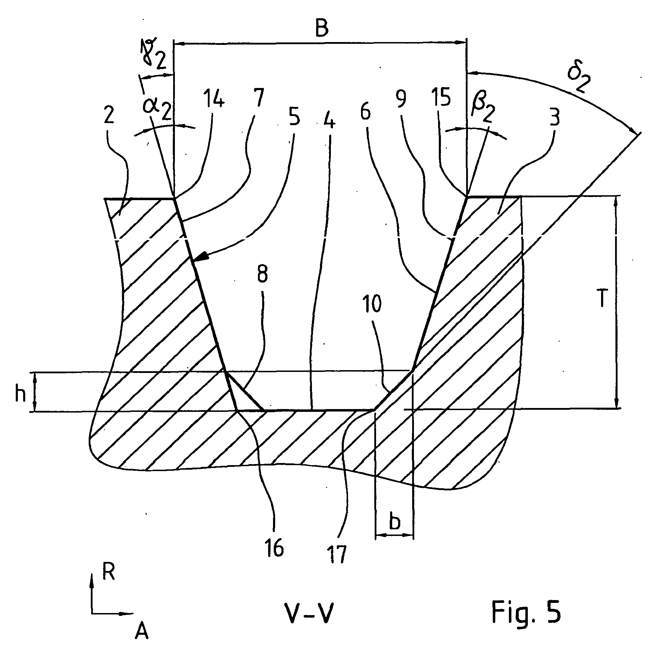

Wie in den Fig.1 und Fig 3 zu erkennen ist, ist in allen Schnittebenen, die die Reifenachse aufweisen, im ersten Umfangsabschnitt 11 über dessen gesamte Umfangserstreckung hinweg der radial äußere Erstreckungsbereich 7 der Rillenflanke 5 geradlinig unter Einschluss eines Neigungswinkels α₁ zur radialen Richtung R, der radial innere Erstreckungsbereich 8 geradlinig unter Einschluss eines Winkels γ₁ zur Radialen R, der radial äußere Erstreckungsbereich 9 der Rippenflanke 6 geradlinig unter Einschluss eines Winkels β₁ und der radiale innere Erstreckungsbereich 10 geradlinig unter Einschluss eines Winkels δ₁ zur Radialen R geneigt ausgebildet. Wie in den Fig. 1 und Fig 5 zu erkennen ist, ist in allen Schnittebenen, die die Reifenachse aufweisen, im zweiten Umfangsabschnitt 12 über dessen gesamte Umfangserstreckung hinweg der radial äußere Erstreckungsbereich 7 der Rippenflanke 5 geradlinig unter Einschluss eines Winkels α₂ zur Radialen R, der radial innere Erstreckungsbereich 8 geradlinig unter Einschluss einer Winkels γ₂ zur Radialen R, der radial äußere Erstreckungsbereich 9 der Rippenflanke 6 geradlinig unter Einschluss eines Winkels β₂ zur Radialen R und der radial innere Erstreckungsbereich 10 geradlinig unter Einschluss eines Winkels δ₂ zur Radialen R geneigt ausgebildet. Der radial äußeren Erstreckungsbereiche 7 und der radial innere Erstreckungsbereich 8 der Rippenflanke 5 sowie der radial äußere Erstreckungsbereich 9 und der radial innere Erstreckungsbereich 10 der Rippenflanke 6 sind dabei in radialer Richtung R nach außen jeweils von der axialen Position der Rillenmitte wegweisend geneigt ausgebildet. Für die Neigungswinkel gilt: γ₁ > γ₂, α₁ < α₂, δ₁ < δ₂ und β₁ > β₂.

Für die Winkel γ₁, γ₂, δ₁ und δ₂ gilt γ₁ = (1/2)(90°- α₁), γ₂= (1/2)(90°- α₂),
δ₁= (1/2)(90°- β₁) und δ₂ (1/2)(90°- β₂).

Die Winkel α₁, α₂, β₁ und β₂ sind dabei jeweils aus einem Winkelbereich zwischen 0° und 15° einschließlich gewählt.

In einem in den Figuren 3 bis 5 dargestellten Ausführungsbeispiel sind die Werte β₁ = δ₁ und α₂ = γ₂ gewählt.

In einem anderen in den Figuren 3 bis 5 nicht dargestellten Ausführungsbeispiel sind die Winkel γ₁, γ₂, δ₁ und δ₂ so gewählt, dass 35° < γ₁ ≤ 45°, 35° ≤ y₂ ≤ 45°, 35°≤ δ₁ < 45° und 35°< δ₂ ≤ 45°. Beispielsweise ist γ₁ = 40°; γ₂ = 37°, δ₁ = 37° und δ₂ = 40° gewählt.

Die radial inneren Erstreckungsbereiche 8 und 10 sind jeweils über den gesamten Umfang des Reifens in allen die Reifenachse aufweisenden Schnittebenen mit einer in axialer Richtung A gemessenen Erstreckungsbreite b ausgebildet, wobei b sowohl in den ersten Umfangsabschnitten 11 als auch in den zweiten Umfangsabschnitten 12 und in den Übergangsabschnitten 13 jeweils mindestens 2mm und höchstens den Wert von (B/2) aufweist, wobei B das jeweilige Maß der axialen Erstreckung der Rille an der radial äußeren Mantelfläche des Reifens bildet, mit 4 mm ≤ B ≤ 25 mm.

Wie in den Figuren 1, 2 und 4 zu erkennen ist, ist in dem kurzen Übergangsabschnitt 13 der Länge L₃ der radial innere Erstreckungsabschnitt 8 mit einem ausgehend von dem angrenzenden ersten Umfangserstreckungsabschnitt 11 mit Neigungswinkel γ, zum angrenzenden zweiten Umfangsabschnitt 12 mit Neigungswinkel γ₁ kontinuierlich verändertem Neigungswinkel γ ausgebildet, so dass in diesem Übergangsabschnitt 13 ein fließender Übergang des Neigungswinkels γ von dem in Umfangsabschnitt 11 ausgebildeten Neigungswinkel γ₁ zu dem in Umfangsabschnitt 12 ausgebildeten Neigungswinkel γ₂ erfolgt. Ebenso ist der radial äußere Erstreckungsbereich 7 mit einem in diesem Übergangsabschnitt 13 fließenden, kontinuierlichen veränderten Neigungswinkel α ausgebildet, wobei ausgehend von dem Neigungswinkel α₁ des angrenzenden ersten Umfangsabschnitts 11 bis zu dem Neigungswinkel α₂ des angrenzenden zweiten Umfangsabschnitts 12 ein fließender Übergang des Neigungswinkels α erfolgt. In analoger Weise ist in dem Übergangsabschnitt 13 der radial innere Erstreckungsbereich 10 mit einem kontinuierlich veränderten Neigungswinkel δ ausgebildet ausgehend von dem Neigungswinkel δ₁ des angrenzenden ersten Umfangsabschnitts 11 bis hin zum Neigungswinkel δ₂ des angrenzenden zweiten Umfangsabschnittes 12. Ebenso ist der radial äußere Erstreckungsbereich 9 im Übergangsabschnitt 13 ausgehend von dem Neigungswinkel β₁ des angrenzenden ersten Umfangsabschnitt 11 bis zum Neigungswinkel β₂ des angrenzenden zweiten Umfangsabschnitt 12 mit einem kontinuierlich verändertem Neigungswinkel β ausgebildet.

Die Figuren 3 bis 5 zeigen ein Ausführungsbeispiel, bei dem α₁ = β₂ und α₂ = β₁ sowie γ₁ = δ₂ und γ₁ = δ₁ gewählt ist.

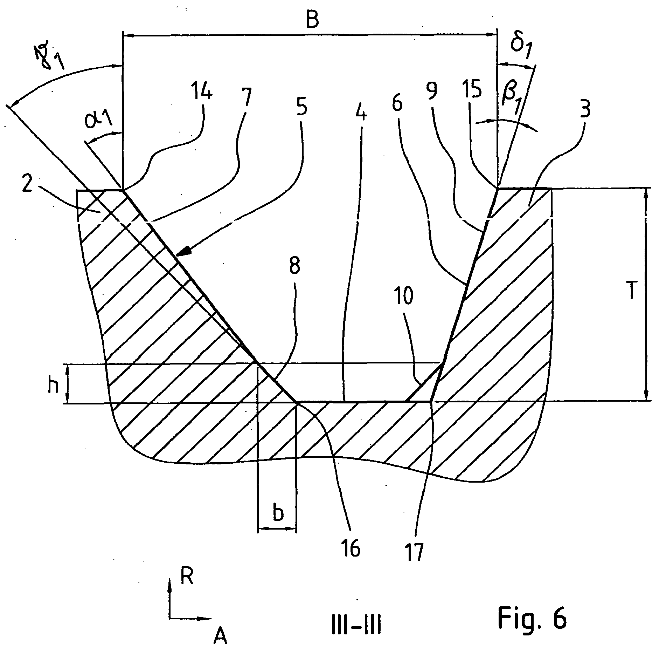

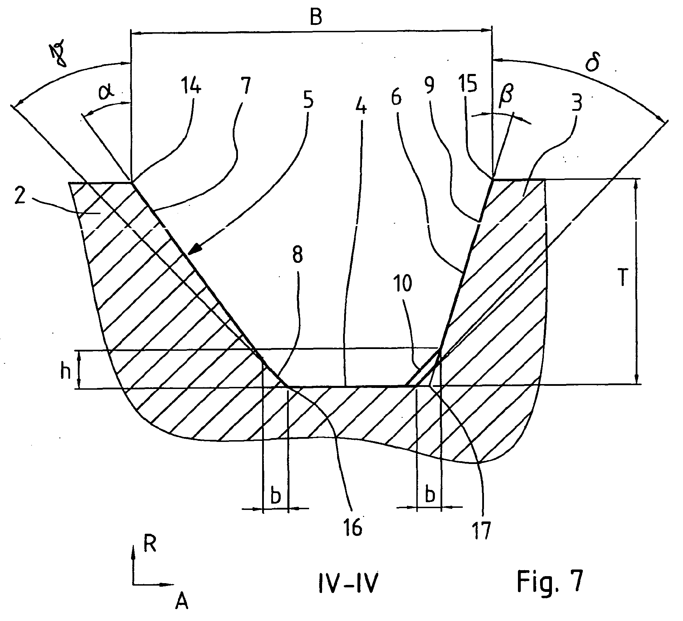

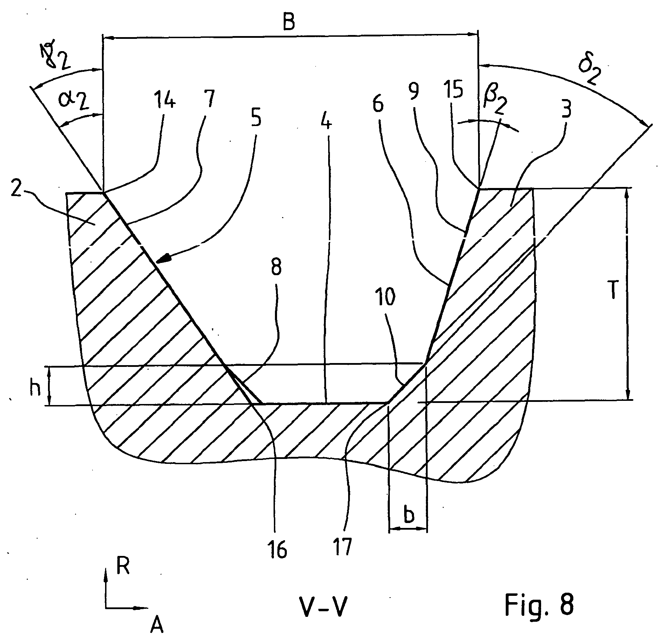

Die Figuren 6 bis 8 zeigen ein Ausführungsbeispiel, bei dem γ₁ > γ₂, α₁ < α₂, δ₁ < δ₂ und β₁ > β₂ sowie α₁ > β₂ , α₂ > β₁ γ₁ < δ₂ und γ₂ < δ₁ gewählt ist. Diese Ausführung bewirkt einen asymmetrischen Querschnitt der Umfangsrille über den gesamten Umfang des Fahrzeugluftreifens. Die in den Figuren 3 bis 5 dargestellte Ausführung zeigen einen demgegenüber symmetrischeren Aufbau der Umfangsrille.

In einem in den Figuren 6 bis 8 dargestellten Ausführungsbeispiel sind die Winkel γ₁, γ₂, δ₁ und δ₂ so gewählt, dass 35° < δ₂ ≤ 45° und 35° ≤ γ₂ < 45°.

Beispielsweise ist γ₁ = 40°, γ₂ = 35°, δ₁ = 37° und δ₂ = 42° gewählt.

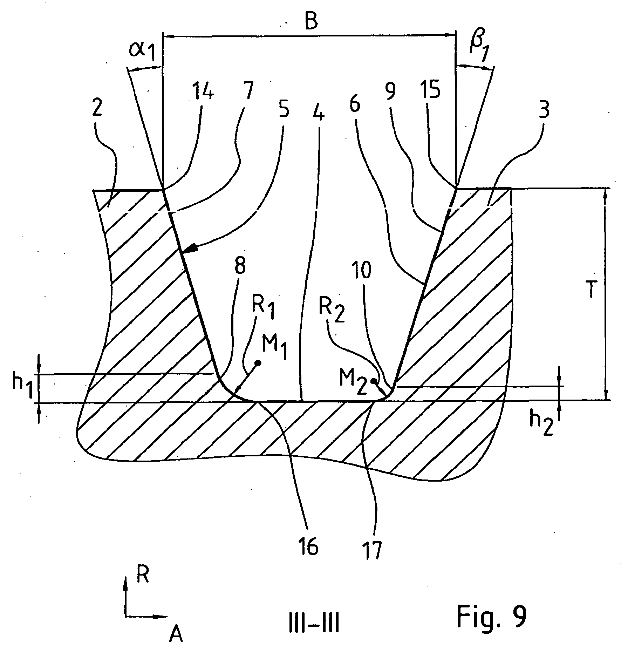

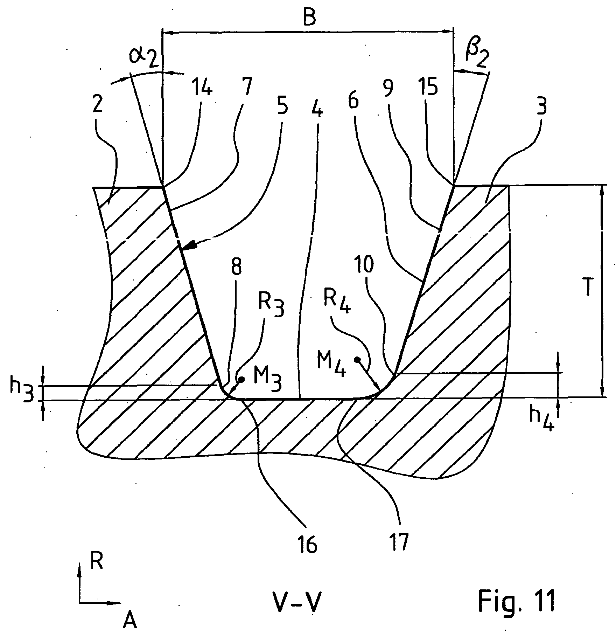

Die Figuren 9 bis 12 zeigen ein anders Ausführungsbeispiel der Umfangsrille 1 entsprechend der Darstellung der Figuren 3 bis 5, wobei jedoch der radial innere Erstreckungsbereich 8 der Rippenflanke 5 im ersten Umfangsabschnitt 11 einen gekrümmten Konturverlauf mit Krümmungsradius R₁ um einen Krümmungsmittelpunkt M₁ auf der von der Rippenflanke 5 wegweisenden Seite des Reifenprofils und im zweiten Umfangserstreckungsabschnitt 12 einen gekrümmten Konturverlauf mit dem Radius R₃ um einen Krümmungsmittelpunkt M₃ aufweist mit R₁ > R₃. Der radiale innere Erstreckungsbereich 10 der Rippenflanke 6 weist im ersten Umfangsabschnitt 11 einen gekrümmten Konturverlauf mit Krümmungsradius R₂ um einen Krümmungsmittelpunkt M₂ und im zweiten Umfangsabschnitt 12 einen gekrümmten Konturverlauf mit einem Krümmungsradius R₄ um einen Krümmungsmittelpunkt M₄ auf mit R₄ > R₂. Bei dieser Ausführung erstreckt sich der radial innere Erstreckungsbereich 8 der Rippenflanke 5 im ersten Umfangsabschnitt 11 - wie in Figur 9 dargestellt ist- über eine ausgehend vom Rillengrund 4 gemessene radiale Erstreckungshöhe h₁ und im zweiten Umfangsabschnitt 12 - wie in Figur 11 dargestellt ist- über eine radiale Erstreckungshöhe h₃ vom Rillengrund 14 mit h₁ > h₃. Ebenso erstreckt sich der radial innere Erstreckungsbereich 10 der Rippenflanke 6 im den ersten Umfangsabschnitt 11 - wie in Figur 9 dargestellt ist- jeweils über eine ausgehend vom Rillengrund 4 gemessene radiale Erstreckungshöhe h₂ und im zweiten Umfangsabschnitt 12 - wie in Figur 11 dargestellt ist - über eine Höhe h₄ mit h₄ > h₂.

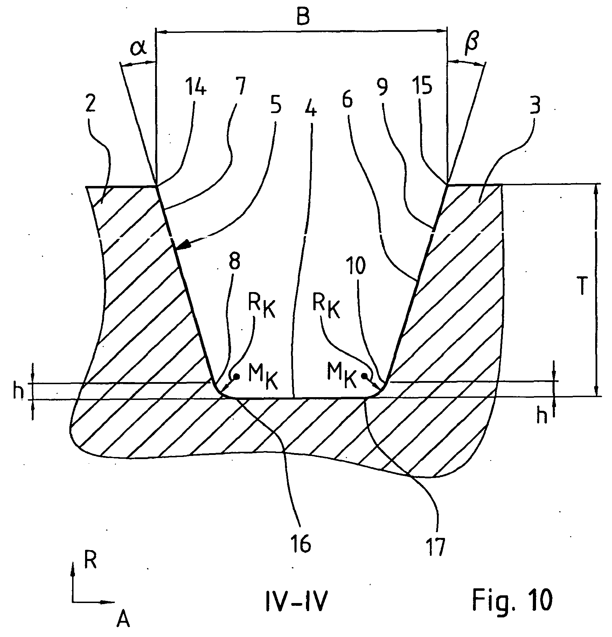

In dem in Figur 10 dargestellten Übergangsabschnitt 13 geht ausgehend vom angrenzenden ersten Umfangsabschnitt 11 zum angrenzenden zweiten Umfangsabschnitt 12 unter kontinuierlicher Abnahme der radialen Erstreckungshöhe h des radial inneren Erstreckungsbereiches 8 ausgehend von der Höhe h₁ im ersten Umfangsabschnitt 11 bis zur der Höhe h₃ im zweiten Umfangsabschnitt 12 der Krümmungsradius R_{K} kontinuierlich vom Krümmungsradius R₁ im ersten Umfangsabschnitt 11 zum Krümmungsradius R₃ im zweiten Umfangsabschnitt 12 über. Ebenso geht im Übergangsabschnitt 13 ausgehend vom angrenzenden ersten Umfangsabschnitt 11 zum angrenzenden zweiten Umfangsabschnitt 12 unter kontinuierlicher Zunahme der radialen Erstreckungshöhe h des radial inneren Erstreckungsbereiches 10 ausgehend von der Höhe h₂ im ersten Umfangsabschnitt 11 bis zur der Höhe h₄ im zweiten Umfangsabschnitt 12 der Krümmungsradius R_{K} kontinuierlich vom Krümmungsradius R₂ im ersten Umfangsabschnitt 11 zum Krümmungsradius R₄ im zweiten Umfangsabschnitt 12 über.

Die Krümmungsradien R₁, R₂, R₃ und R₄ sind aus einem Wertebereich zwischen 0,5mm und 4mm ausgebildet.

### Bezugszeichenliste

### (Teil der Beschreibung)

- 1: Umfangsrille
- 2: Umfangsrippe
- 3: Umfangsrippe
- 4: Rillengrund
- 5: Rippenflanke
- 6: Rippenflanke
- 7: Radial äußerer Erstreckungsbereich
- 8: Radial innerer Erstreckungsbereich
- 9: Radial äuberer Erstreckungsbereich
- 10: Radial innerer Erstreckungsbereich
- 11: Erster Umfangsabschnitt
- 12: Zweiter Umfangsabschnitt
- 13: Übergangsabschnitt
- 14: Schnittkonturlinie
- 15: Schrittkonturlinie
- 16: Schnittkonturlinie
- 17: Schnittkonturlinie

## Patentansprüche

1. Laufstreifenprofil eines Fahrzeugluftreifens mit wenigstens einer durch zwei über den Umfang des Reifens erstreckte radial erhabene Rippen (2,3) axial begrenzten und über den Umfang des Reifens erstreckten, in Umfangsrichtung U ausgerichteten Rille (1), welche mit einer maximalen Rillentiefe T ausgebildet und in radialer Richtung R nach innen durch einen Rillengrund (4) und in beide axiale Erstreckungsrichtungen jeweils durch eine Rillenwand begrenzt ist, die jeweils eine zur Rille (1) gerichtete Rippenflanke (5,6) einer der beiden Rippen (2,3) bildet, webei sich die beiden Rillenwände jeweils aus dem Rillengrund (4) nach radial außen bis zu der die jeweilige Rippenflanke (5,6) nach radial außen begrenzenden Mantelfläche erstrecken und jeweils einen radial inneren (8,10) und einen radial äußeren Erstreckungsbereich (7,9) aufweisen, von denen der radial innere Erstreckungsbereich (8,10) ausgehend vom Rillengrund (4) in radialer Richtung mit einer Erstreckungshöhe h mit (0,07T) ≤ h ≤ (0,45T) ausgebildet ist, wobei die Rippenflanken (5,6) im radial inneren Erstreckungsbereich (8,10) in allen Schnittebenen, die die Reifenachse beinhalten, entweder jeweils eine geradlinige Schnittkontur mit Neigungswinkel (γ, δ) zur Radialen R oder eine gekrümmte Kontur mit Krümmungsradius (Rₖ) und auf der von der Reifenachse wegweisenden Seite der Rippenflanke liegendem Krümmungsmittelpunkt (M) bilden,
wobei die Rille (1) aus längs ihrer Umfangserstreckung in ihrer Abfolge alternierenden ersten (11) und zweiten (12) Umfangsabschnitten ausgebildet ist, wobei jede Rippenflanke (5,6) in ihrem radial inneren Erstreckungsbereich (8,10) im ersten Umfangsabschnitt (11) mit anderer Neigung bzw. mit anderen Krümmung ausgebildet ist als im zweiten Umfangsabschnitt (12) und zwar derart, dass die eine Rippenflanke (5) jeweils in den ersten Umfangsabschnitten (11) größere Neigungswinkel γ bzw. einen größeren Krümmungsradius (Rₖ als im zweiten Umfangsabschnitt (12) und die andere Rippenflanke (6) jeweils in den ersten Umfangsabschnitten (11) kleinere Neigungswinkel **δ** bzw. einen kleineren Krümmungsradius (Rₖ) als im zweiten Umfangsabschnitt (12) aufweist,
**dadurch gekennzeichnet,**
**dass** der radial äußere Erstreckungsbereich (7) der ersten Rippenflanke (5) in allen die Reifenachse aufweisenden Schnittebenen eine im wesentlichen geradlinige Schnittkontur mit Neigungswinkeln α zur Radialen R und der radial äußere Erstreckungsbereich (9) der zweiten Rippenflanke (6) in allen die Reifenachse aufweisenden Schnittebenen eine im wesentlichen geradlinige Schnittkontur mit Neigungswinkeln β zur Radialen R aufweist,
wobei der radial äußere Erstreckungsbereich (7) der ersten Rippenflanke (5) in den ersten Umfangsabschnitten (11) der Rille (1) mit Neigungswinkeln α₁ zur Radialen R und in den zweiten Umfangsabschnitten (12) der Rille (1) mit Neigungswinkeln α₂ zur Radialen R ausgebildet ist, und
wobei der radial äußere Erstreckungsbereich (8) der zweiten Rippenflanke (6) in den ersten Umfangsabschnitten (11) der Rille (1) mit Neigungswinkeln β₁ zur Radialen R und in den zweiten Umfangsabschnitten (12) der Rille (1) mit Neigungswinkeln β₂ zur Radialen R ausgebildet ist,
mit α₁ <α₂ und mit β₁ >β₂.

2. Laufstreifenprofil gemäß den Merkmalen von Anspruch 1,
wobei die Umfangsabschnitte (11,12) jeweils eine in Umfangsrichtung U gemessene Erstreckungslänge L von 20mm ≤ L ≤ 100mm aufweisen.

3. Laufstreifenprofil gemäß den Merkmalen von Anspruch 1 oder 2,
wobei zwischen erstem (11) und zweitem (12) Umfangsabschnitt jeweils ein gegenüber dem ersten (11) und zweiten (12) Umfangsabschnitt kürzerer Übergangsabschnitt (13) ausgebildet ist, in welchem an beiden Rippenflanken (5,6) jeweils im radial inneren Erstreckungsbereich (8,10) der Neigungswinkel bzw. der Krümmungsradius sich längs der Erstreckung der Rille (1) stetig - insbesondere kontinuierlich - ändert.

4. Laufstreifenprofil gemäß den Merkmalen von einem oder mehreren der vorangegangenen Ansprüche,
mit einer Erstreckungshöhe h von 0,5mm ≤ h ≤ 4mm und mit einer Rillentiefe T von 6,5mm ≤ T ≤ 9mm.

5. Laufstreifenprofil gemäß den Merkmalen von einem oder mehreren der vorangegangenen Ansprüche,
wobei die eine Rippenflanke (5) in ihrem radial inneren Erstreckungsbereich (8) jeweils in den ersten Umfangsabschnitten (11) mit Neigungswinkeln γ₁ und in den zweiten Umfangsabschnitten (12) mit Neigungswinkeln γ₂ gegenüber der Radialen R und die andere Rippenflanke (6) in ihrem radial inneren Erstreckungsbereich (10) jeweils in den ersten Umfangsabschnitten (11) mit Neigungswinkeln δ₁ und in den zweiten Umfangsabschnitten (12) mit Neigungswinkeln δ₂ gegenüber der Radialen R mit γ₁ >γ₂ und mit δ₁ < δ₂ ausgebildet ist, mit 35° < γ₁ ≤ 45°, 35° ≤ γ₂ < 45°, 35°≤ δ₁ < 45° und 35°< δ₂ ≤ 45°.

6. Laufstreifenprofil gemäß den Merkmalen von einem oder mehreren der vorangegangenen Ansprüche,
wobei der radial innere Erstreckungsbereich (8,10) der beiden Rippenflanken (5,6) jeweils über den gesamten Umfang des Reifens in den die Reifenachse aufweisenden Schnittebenen mit einer in axialer Richtung A gemessenen Erstreckungsbreite b ausgebildet ist mit 2mm ≤ b ≤ (B/2), wobei B das jeweilige Maß der axialen Erstreckung der Rille (1) an der radial äußeren Mantelfläche des Reifens ist,
wobei B insbesondere mit 4mm ≤ B ≤ 25mm ausgebildet ist.

7. Laufstreifenprofil gemäß den Merkmalen von einem oder mehreren der vorangegangenen Ansprüche,
wobei der radial äußere Erstreckungsbereich (7) der ersten Rippenflanke (5) in allen die Reifenachse aufweisenden Schnittebenen eine im wesentlichen geradlinige Schnittkontur mit Neigungswinkeln α zur Radialen R und der radial äußere Erstreckungsbereich (9) der zweiten Rippenflanke (6) in allen die Reifenachse aufweisenden Schnittebenen eine im wesentlichen geradlinige Schnittkontur mit Neigungswinkeln β zur Radialen R aufweist,
wobei 0° ≤ α ≤ 15° und 0° ≤ β ≤ 15°.

8. Laufstreifenprofil gemäß den Merkmalen von einem oder mehreren der vorangegangenen Ansprüche,
wobei wenigstens bei einer der beiden Rippen (2,3) - insbesondere bei beiden Rippen -die Rippenflanke (5,6) mit der die Rippe (2,3) nach radial außen begrenzenden, die Bodenkontakt bildenden Oberfläche eine geradlinige in Umfangsrichtung U ausgerichtete über den Umfang des Reifens erstreckte Schnittkonturiinie (14,15) bildet, die den radial äußeren Erstreckungsbereich (7,9) der Rippenflanke (5,6) nach radial außen begrenzt.

9. Laufstreifenprofil gemäß den Merkmalen von einem oder mehreren der vorangegangenen Ansprüche,
wobei wenigstens bei einer der beiden Rippen (2,3) - insbesondere bei beiden Rippen -die Rippenflanke (5,6) mit dem die Rille (1) nach radial innen begrenzenden Rillengrund (4) eine geradlinige in Umfangsrichtung U ausgerichtete über den Umfang des Reifens erstreckte Schnittkonturlinie (16,17) bildet, die den radial inneren Erstreckungsbereich (8,10) der Rippenflanke (5,6) nach radial innen begrenzt.

10. Laufstreifenprofil gemäß den Merkmalen von einem oder mehreren der vorangegangenen Ansprüche,
wobei die Neigungswinkel γ₁, γ₂, δ₁ und δ₂ mit γ₁= (1/2)(90°- α₁),
mit γ₂= (1/2)(90°- α₂), mit δ₁= (1/2)(90°- β₁) und mit δ₂ (1/2)(90°- β₂) ausgebildet sind.

## Claims

1. Tread profile of a pneumatic vehicle tyre with at least one groove (1), which is axially delimited by two radially raised ribs (2, 3) that are made to extend over the circumference of the tyre, is itself made to extend over the circumference of the tyre and aligned in the circumferential direction U, is formed with a maximum groove depth T and is delimited in the radial direction R inwardly by a groove base (4) and in both axial directions of extent respectively by a groove wall, which in each case forms a rib flank (5, 6) of one of the two ribs (2, 3) that is directed towards the groove (1), wherein the two groove walls respectively extend from the groove base (4) radially outwards up to the lateral surface that radially outwardly delimits the respective rib flank (5, 6) and have in each case a radially inner region of extent (8, 10) and a radially outer region of extent (7, 9), of which the radially inner region of extent (8, 10) is formed with a height of extent h in the radial direction from the groove base (4) with (0.07T) ≤ h ≤ (0.45T), the rib flanks (5, 6) in the radially inner region of extent (8, 10) forming in all of the sectional planes that contain the tyre axis either in each case a straight sectional contour with an angle of inclination (γ, δ) in relation to the radial R or a curved contour with a radius of curvature (Rₖ) and a centre point of curvature (M) lying on the side of the rib flank that is facing away from the tyre axis, wherein the groove (1) is formed by first (11) and second (12) circumferential portions that alternate in their sequence along their circumferential extent, each rib flank (5, 6) being formed in its radially inner region of extent (8, 10) in the first circumferential portion (11) with a different inclination or with a different curvature than in the second circumferential portion (12), to be precise in such a way that the one rib flank (5) respectively has greater angles of inclination γ or a greater radius of curvature (Rₖ) in the first circumferential portions (11) than in the second circumferential portion (12) and the other rib flank (6) respectively has smaller angles of inclination δ or a smaller radius of curvature (Rₖ) in the first circumferential portions (11) than in the second circumferential portion (12),
**characterized**
**in that** the radially outer region of extent (7) of the first rib flank (5) has in all of the sectional planes having the tyre axis a substantially straight sectional contour with angles of inclination α in relation to the radial R and the radially outer region of extent (9) of the second rib flank (6) has in all of the sectional planes having the tyre axis a substantially straight sectional contour with angles of inclination β in relation to the radial R,
wherein the radially outer region of extent (7) of the first rib flank (5) is formed in the first circumferential portions (11) of the groove (1) with angles of inclination α₁ in relation to the radial R and in the second circumferential portions (12) of the groove (1) with angles of inclination α₂ in relation to the radial R, and
wherein the radially outer region of extent (8) of the second rib flank (6) is formed in the first circumferential portions (11) of the groove (1) with angles of inclination p₁ in relation to the radial R and in the second circumferential portions (12) of the groove (1) with angles of inclination β₂ in relation to the radial R, with α₁ < α₂ and with β₁ > β_{2.}

2. Tread profile according to the features of Claim 1, wherein the circumferential portions (11, 12) respectively have a length of extent L, measured in the circumferential direction U, of 20 mm ≤ L ≤ 100 mm.

3. Tread profile according to the features of Claim 1 or 2,
wherein between the first (11) and the second (12) circumferential portion there is respectively formed a transitional portion (13), which is shorter than the first (11) and the second (12) circumferential portion and in which at both rib flanks (5, 6) respectively in the radially inner region of extent (8, 10) the angle of inclination or the radius of curvature changes steadily - in particular continuously - along the extent of the groove (1).

4. Tread profile according to the features of one or more of the preceding claims,
with a height of extent h of 0.5 mm ≤ h ≤ 4 mm and with a groove depth T of 6.5 mm ≤ T ≤ 9 mm.

5. Tread profile according to the features of one or more of the preceding claims,
wherein the one rib flank (5) is formed in its radially inner region of extent (8) respectively in the first circumferential portions (11) with angles of inclination γ₁ and in the second circumferential portions (12) with angles of inclination γ₂ with respect to the radials R and the other rib flank (6) is formed in its radially inner region of extent (10) respectively in the first circumferential portions (11) with angles of inclination δ₁ and in the second circumferential portions (12) with angles of inclination δ₂ with respect to the radials R with γ₁ > γ₂ and with δ₁ < δ₂, with 35° < γ₁ ≤ 45°, 35° ≤ γ₂ < 45°, 35° ≤ δ₁ < 45° and 35° < δ₂ ≤ 45°.

6. Tread profile according to the features of one or more of the preceding claims,
wherein the radially inner region of extent (8, 10) of the two rib flanks (5, 6) is formed respectively over the entire circumference of the tyre in the sectional planes having the tyre axis with a width of extent b, measured in the axial direction A, with 2 mm ≤ b ≤ (B/2), where B is the respective amount of axial extent of the groove (1) at the radially outer lateral surface of the tyre,
wherein B is formed in particular with 4 mm ≤ B ≤ 25 mm.

7. Tread profile according to the features of one or more of the preceding claims,
wherein the radially outer region of extent (7) of the first rib flank (5) has in all of the sectional planes having the tyre axis a substantially straight sectional contour with angles of inclination α in relation to the radial R and the radially outer region of extent (9) of the second rib flank (6) has in all of the sectional planes having the tyre axis a substantially straight sectional contour with angles of inclination β in relation to the radial R, wherein 0° ≤ α ≤ 15° and 0° ≤ β ≤ 15°.

8. Tread profile according to the features of one or more of the preceding claims,
wherein at least in the case of one of the two ribs (2, 3) - in particular in the case of both ribs - the rib flank (5, 6) forms with the surface that delimits the rib (2, 3) radially outwards and forms the ground contact a straight sectional contour line (14, 15), which is aligned in the circumferential direction U, is made to extend over the circumference of the tyre and radially outwardly delimits the radially outward region of extent (7, 9) of the rib flank (5, 6).

9. Tread profile according to the features of one or more of the preceding claims,
wherein at least in the case of one of the two ribs (2, 3) - in particular in the case of both ribs - the rib flank (5, 6) forms with the groove base (4) that delimits the groove (1) radially inwards a straight sectional contour line (16, 17), which is aligned in the circumferential direction U, is made to extend over the circumference of the tyre and radially inwardly delimits the radially inward region of extent (8, 10) of the rib flank (5, 6).

10. Tread profile according to the features of one or more of the preceding claims,
wherein the angles of inclination γ₁, γ₂, δ₃, and δ₂ are formed with γ₁ = (1/2) (90°-α₁) , with γ₂ = (1/2) (90°-α₂), with δ₁ = (1/2) (90°-β₁) and with δ₂ = (1/2) (90°-β₂).

## Revendications

1. Profil de bande de roulement pour bandage pneumatique pour roue de véhicule, le profil présentant au moins une rainure (1) délimitée axialement par deux nervures (2, 3) en saillie radiale s'étendant sur la périphérie du bandage de roue, la rainure s'étendant sur toute la périphérie du bandage de roue, étant orientée dans la direction périphérique U, présentant une profondeur maximale T et étant délimitée vers l'intérieur dans la direction radiale R par un fond (4) et dans les deux directions d'extension axiale par une paroi qui forme un flanc (5, 6), orienté vers la rainure (1), de l'une des deux nervures (2, 3),
chacune des deux parois de rainure s'étendant radialement vers l'extérieur depuis le fond (4) de la rainure jusqu'à la surface d'enveloppe qui délimite radialement vers l'extérieur le flanc (5, 6) de la nervure respective et présentant une partie d'extension radiale intérieure (8, 10) et une partie d'extension radiale extérieure (7, 9),
la partie d'extension radialement intérieure (8, 10) s'étendant dans la direction radiale sur une hauteur h comptée à partir du fond (4) de la rainure telle que (0,07T) ≤ h ≤ (0,45T),
les flancs (5, 6) de nervure formant dans la partie (8, 10) d'extension radiale intérieure et dans tous les plans de coupe qui contiennent l'axe du bandage de roue, soit un contour de coupe rectiligne formant un angle d'inclinaison (γ, δ) par rapport à la radiale R ou un contour courbe d'un rayon de courbure (Rₖ) et un centre de courbure (M) situé sur le côté du flanc de la nervure non tourné vers l'axe du bandage de roue,
la rainure (1) étant formée de premières sections périphériques (11) et de deuxièmes sections périphériques (12) alternées le long de son extension périphérique,
chaque flanc (5, 6) de nervure présentant dans la partie radialement intérieure (8, 10) de son extension une autre inclinaison ou une autre courbure dans la première section périphérique (11) que dans la deuxième section périphérique (12), de telle sorte que dans chacune des premières sections périphériques (11), le flanc (5) de nervure présente un angle d'inclinaison γ plus grand ou un rayon de courbure (Rₖ) plus grand que dans la deuxième section périphérique (12) et que dans chacune des premières sections périphériques (11), l'autre flanc (6) de nervure présente un angle d'inclinaison δ plus petit ou un rayon de courbure (Rₖ) plus petit que dans la deuxième section périphérique (12),
**caractérisé en ce que**
dans tous les plans de coupe qui présentent l'axe du bandage de roue, la partie (7) d'extension radialement extérieure du premier flanc (5) de nervure présente en coupe un contour essentiellement rectiligne d'un angle d'inclinaison α par rapport à la radiale R,
**en ce que** dans tous les plans de coupe qui présentent l'axe du bandage de roue, la partie radialement extérieure d'extension (9) du deuxième flanc de nervure (6) présente un contour en coupe essentiellement rectiligne d'un angle d'inclinaison β par rapport à la radiale R,
**en ce que** dans les premières sections périphériques (11) de la rainure (1), la partie d'extension radialement extérieure (7) du premier flanc (5) de nervure présente des angles d'inclinaison α₁ par rapport à la radiale R et dans les deuxièmes sections périphériques (12) de la rainure (1) des angles d'inclinaison α₂ par rapport à la radiale R et
**en ce que** dans les premières sections périphériques (11) de la rainure (1), la partie d'extension radiale extérieure (8) du deuxième flanc (6) de nervure présente des angles d'inclinaison β₁ par rapport à la radiale R et dans les deuxièmes sections périphériques (12) de la rainure (1) des angles d'inclinaison β₂ par rapport à la radiale R, avec α₁ < α₂ et β₁ > β₂.

2. Profil de bande de roulement selon les caractéristiques de la revendication 1, dans lequel chacune des sections périphériques (11, 12) présente une longueur d'extension L, mesurée dans la direction périphérique U, telle que 20 mm ≤ L ≤ 100 mm.

3. Profil de bande de roulement selon les caractéristiques des revendications 1 ou 2, dans lequel entre la première section périphérique (11) et la deuxième section périphérique (12) est formée une section de transition (13) plus courte que la première section périphérique (11) et la deuxième section périphérique (12) et dans laquelle l'angle d'inclinaison ou le rayon de courbure varient sur les deux flancs (5, 6) de nervure de manière permanente et en particulier continue dans la partie radialement intérieure (8, 10) de l'extension de la rainure (1).

4. Profil de bande de roulement selon les caractéristiques d'une ou plusieurs des revendications précédentes, dans lequel la hauteur d'extension h est comprise entre 0,5 mm ≤ h ≤ 4 mm et la profondeur T de la rainure est telle que 6,5 mm ≤ T ≤ 9 mm.

5. Profil de bande de roulement selon les caractéristiques d'une ou plusieurs des revendications précédentes, dans lequel un flanc (5) de nervure présente dans sa partie d'extension radialement intérieure (8) et dans chacune des premières sections périphériques (11) des angles d'inclinaison γ₁ et dans les deuxièmes sections périphériques (12) des angles d'inclinaison γ₂ par rapport à la radiale R, l'autre flanc de nervure (6) présentant dans sa partie d'extension radialement intérieure (10) des angles d'inclinaison δ₁ par rapport à la radiale R dans les premières sections périphériques (11) et des angles d'inclinaison δ₂ par rapport à la radiale R dans les deuxièmes sections périphériques (12), avec γ₁ > γ₂ et δ₁ < δ₂ et 35° < γ₁ ≤ 45°, 35° ≤ y₂ ≤ 45°, 35° ≤ δ₁ < 45° et 35° < δ₂ ≤ 45°.

6. Profil de bande de roulement selon les caractéristiques d'une ou plusieurs des revendications précédentes, dans lequel sur toute la périphérie du bandage de roue, la partie d'extension radialement intérieure (8, 10) des deux flancs de nervure (5, 6) présente dans les plans de coupe présentant l'axe du bandage de roue une largeur d'extension b, mesurée dans la direction axiale A, telle que 2 mm ≤ b ≤ (B/2), B étant la dimension de l'extension axiale de la rainure (1) sur la surface d'enveloppe radialement extérieure du bandage de roue, B étant en particulier tel que 4 mm ≤ B ≤ 25 mm.

7. Profil de bande de roulement selon les caractéristiques d'une ou plusieurs des revendications précédentes, dans lequel dans tous les plans de coupe présentant l'axe du bandage de roue, la partie d'extension radialement extérieure (7) du premier flanc de nervure (5) présente en coupe un contour essentiellement rectiligne dont l'angle d'inclinaison par rapport à la radiale R est α et dans tous les plans de coupe présentant l'axe du bandage de roue, la partie d'extension radialement extérieure (9) du deuxième flanc de nervure (6) présente en coupe un contour essentiellement rectiligne d'angle d'inclinaison β par rapport à la radiale R, avec 0° ≤ α ≤ 15° et 0° ≤ β ≤ 15°.

8. Profil de bande de roulement selon les caractéristiques d'une ou plusieurs des revendications précédentes, dans lequel au moins sur l'une des deux nervures (2, 3) et en particulier sur les deux nervures, le flanc de nervure (5, 6) forme avec la surface formant le contact au sol et délimitant la nervure (2, 3) radialement vers l'extérieur une ligne (14, 15) de contour de coupe rectiligne, orientée dans la direction périphérique U et s'étendant sur la périphérie du bandage de roue, qui délimite radialement vers l'extérieur la partie d'extension radiale extérieure (7, 9) du flanc de nervure (5, 6).

9. Profil de bande de roulement selon les caractéristiques d'une ou plusieurs des revendications précédentes, dans lequel au moins pour l'une des deux nervures (2, 3) et en particulier pour les deux nervures, le flanc de nervure (5, 6) forme avec le fond (4) de rainure qui délimite la rainure (1) radialement vers l'intérieur une ligne (16, 17) de contour de coupe rectiligne, orientée dans la direction périphérique U et s'étendant sur toute la périphérie du bandage de roue, qui délimite radialement vers l'intérieur la partie d'extension radiale intérieure (8, 10) du flanc de nervure (5, 6).

10. Profil de bande de roulement selon les caractéristiques d'une ou plusieurs des revendications précédentes, dans lequel les angles d'inclinaison γ₁, γ₂, δ₁ et δ₂ vérifient les relations γ₁ = (1/2) (90°- α₁), γ₂ = (1/2) (90°- α₂), avec δ₁ = (1/2) (90°- β₁) et avec δ₂ = (1/2) (90°- β₂).
